# EUROPÄISCHE PATENTSCHRIFT

(11) **EP 4 462 635 B1**
(45) Veröffentlichungstag und Bekanntmachung des Hinweises auf die Patenterteilung: **18.11.2026**
(21) Anmeldenummer: 24161533.5
(22) Anmeldetag: 05.03.2024
(51) Int. Cl.: H02J 7/00, A47L 17/00, H02J 7/34, A47L 9/00

(54) **SCHALTUNGSANORDNUNG ZUR SPANNUNGSVERSORGUNG EINER ELEKTROCHEMISCHEN REINIGUNGSEINRICHTUNG**
CIRCUIT ARRANGEMENT FOR SUPPLYING VOLTAGE TO AN ELECTROCHEMICAL CLEANING DEVICE
CIRCUIT D'ALIMENTATION EN TENSION D'UN DISPOSITIF DE NETTOYAGE ÉLECTROCHIMIQUE

(30) Priorität: 10.05.2023 DE 102023112249
(43) Veröffentlichungstag der Anmeldung: 13.11.2024
(73) Patentinhaber: Reuter GmbH & Co. KG, 40699 Erkrath (DE)
(72) Erfinder: Reuter, Olaf, 40699 Erkrath (DE)
(74) Vertreter: Schmid, Wolfgang

(56) Entgegenhaltungen:
- CN-A- 112 653 231
- DE-U1- 202014 106 289
- US-A1- 2018 323 641
- US-A1- 2022 224 149

## Beschreibung

Die Erfindung betrifft ein Verfahren zur Spannungsversorgung einer elektrochemischen Reinigungseinrichtung.

Aus der DE 20 2014 106 289 U1 ist eine in Form einer elektrochemischen Reinigungseinrichtung ausgeführte Vorrichtung zur Reinigung metallischer Oberflächen bekannt. Zur Stromversorgung einer Elektrode der elektrochemischen Reinigungseinrichtung dient ein Akkumulator bzw. Akku mit nachgeschaltetem Wechselrichter und Steuerungseinheit, die bedarfsweise aus der Gleichspannung des Akkumulators eine höhere oder niedrigere Wechsel- oder Gleichspannung erzeugen. Obwohl Akkus im Vergleich zu der ansonsten üblichen Stromversorgung aus dem Netz relativ hohe Ströme liefern können, bringen sie den Nachteil mit sich, dass sie vergleichsweise schnell entladen werden.

Aus der US 2022/224149 A1 sind eine Schaltungsanordnung und ein Verfahren zum Steuern einer unterbrechungsfreien Stromversorgung, die zwischen einem Netz und einer variablen Last angeordnet ist, bekannt, bei dem die unterbrechungsfreie Stromversorgung einen Gleichstromzwischenkreis, der einen über einen Netzschalter mit dem Netz verbundenen Gleichrichter, einen Energiespeicher und einen mit der Last verbundenen Wechselrichter verbindet, und einen schaltbaren Bypass umfasst, der zwischen dem Netzschalter und der Last und parallel zu dem durch den Gleichrichter, den Gleichstromzwischenkreis und den Wechselrichter gebildeten Pfad geschaltet ist. Das Verfahren umfasst das Überwachen einer Stromversorgung des Netzes, das Vergleichen der Stromversorgung mit einer Lastanforderung der Last, das Schließen des Netzschalters, wenn die Stromversorgung die Lastanforderung erfüllt und das Einschalten des Bypasses, um die Last mit Wechselstrom aus dem Netz zu versorgen.

Die CN 112 653 231 A beschreibt eine Vorrichtung und ein Verfahren zur Notstromversorgung eines Stromterminals. Durch eine Backup-Batterie, eine Batteriemanagementeinheit, ein Schaltmodul und eine Verbindungsschnittstelle führt die Batteriemanagementeinheit automatisch ein Lade- und Entlademanagement sowie eine Überwachung abnormaler Zustände an der Backup-Batterie durch, wodurch der normale Betrieb der Backup-Batterie sichergestellt und die Lebensdauer der Batterie verlängert wird.

Die US 2018/323641 A1 betrifft eine tragbare Stromversorgungsbaugruppe für Elektrowerkzeuge, wobei die Stromversorgung über Wechselstrom betrieben wird und einen Netzeingang aufweist.

Aus der EP 1 403 952 B1 ist eine aus einer internen Energiequelle und einer externen Energiequelle gebildete Hybridenergiequelle für einen elektrischen Verbraucher bekannt. In einem unterem Lastbereich wird der Verbraucher alleine durch die extern angeschlossene Energiequelle mit Energie versorgt und in einem oberen Lastbereich wird der Verbraucher durch die externe Energiequelle zusammen mit der internen Energiequelle mit Energie versorgt.

In der DE 10 2011 077 485 A1 ist ein elektrisches Arbeitsgerät mit einer elektrischen Maschine offenbart, die insbesondere als handgeführtes Elektrowerkzeug ausgebildet ist. Hierbei ist ein Akku zum Ausgleich von beim Betrieb der elektrischen Maschine auftretenden Stromspitzen vorgesehen, der insbesondere einen zum Stromanteil eines Netzteils beim Betrieb der elektrischen Maschine fehlenden Anteil beisteuern kann

Weiterhin ist in der DE 10 2007 025 625 A1 ein handgeführtes Arbeitsgerät mit einem elektrischen Antriebsmotor und einer Stromversorgungseinrichtung beschrieben. Die Stromversorgungseinrichtung umfasst einen Netzstecker zum Anschluss an eine externe Stromquelle sowie ein Akkupack, wobei die Stromversorgung des elektrischen Antriebsmotors des handgeführten Arbeitsgeräts alternativ entweder über das Akkupack oder den Netzstecker und die externe Stromquelle erfolgt.

Schließlich ist aus der DE 10 2014 200 464 A1 eine Vorrichtung zum kombinierten Betreiben eines elektrischen Verbrauchers mit Netzstrom und/oder elektrischer Energie aus einer insbesondere als regenerative Energiequelle ausgebildeten unabhängigen Energiequelle bekannt. Beim Überschreiten eines Schwellenwerts für die elektrische Leistung an dem den Verbraucher ansteuernden Ausgang kann der Verbraucher vom Ausgang der Vorrichtung abgekoppelt werden.

Der vorliegenden Erfindung liegt die Aufgabe zugrunde, ein Verfahren zur Spannungsversorgung einer elektrochemischen Reinigungseinrichtung anzugeben, bei dem eine bedarfsgerechte Spannungsversorgung der einer elektrochemischen Reinigungseinrichtung mit vorteilhaften Eigenschaften realisiert ist und die hohe Leistungsreserven für die prozessbedingt hohen Stromimpulse beim elektrochemischen Bearbeiten mit Elektroden, insbesondere Kohlefaserpinseln, ermöglichen.

Erfindungsgemäß wird diese Aufgabe durch das in Anspruch 1 genannte Verfahren zur Spannungsversorgung einer elektrochemischen Reinigungseinrichtung gelöst.

In Anspruch 1 ist ein Verfahren zur Spannungsversorgung einer elektrochemischen Reinigungseinrichtung, mit einem an eine externe Spannungsquelle mit einer Eingangsspannung angeschlossenen Schaltnetzteil und mit einem wiederaufladbaren Batteriespeicher angegeben. Eine zwischen dem Schaltnetzteil und dem wiederaufladbaren Batteriespeicher angeordnete Spannungsverteileinheit steuert das Schaltnetzteil und den wiederaufladbaren Batteriespeicher derart an, dass zumindest im Einschaltbetrieb der elektrochemischen Reinigungseinrichtung die Spannungsversorgung derselben aus dem Schaltnetzteil und dem wiederaufladbaren Batteriespeicher bereitgestellt wird, und dass im Normalbetrieb der elektrochemischen Reinigungseinrichtung die Spannungsversorgung derselben aus dem Schaltnetzteil und eine Ladespannung für den wiederaufladbaren Batteriespeicher von dem Schaltnetzteil bereitgestellt wird.

Das erfindungsgemäße Verfahren ist vorteilhafterweise in der Lage entsprechend dem jeweiligen Bedarf Energie mit hoher Energiedichte und kurzzeitig hohen zur Verfügung gestellten Strömen aus dem wiederaufladbaren Batteriespeicher und gleichzeitig oder alternativ Energie mit hoher Stromstärke, hoher Spannungsstabilität und einem großem Spannungsbereich der Eingangsspannung aus dem Schaltnetzteil bereitzustellen.

Eine nicht zu der Erfindung gehörende Schaltungsanordnung kann zur Spannungsversorgung einer elektrochemischen Reinigungseinrichtung eingesetzt werden, bei der insbesondere im Betrieb zumindest zeitweise hohe Ströme beim Aufsetzen der Elektrode bzw. des Kohlefaserpinsels auf das Werkstück auftreten. Die zu Prozessbeginn noch hohe Elektrolytkonzentration führt zu einer sehr guten Leitfähigkeit. Zusammen mit dem Kurzschlussstrom beim Aufsetzen der Elektrode bzw. des Pinsels bis zum Zünden der stabilen Lichtbögen an den Kohlefaserenden des Pinsels bzw. des Elektronenflusses durch die Filzmembran an der Elektrode ist der Innenwiderstand der Schaltung prinzipbedingt annähernd Null, was die hohen Anfangsströme bewirkt. Die nicht zu der Erfindung gehörende Schaltungsanordnung stellt bedarfsgerecht Energie aus einem wiederaufladbaren Batteriespeicher, beispielsweise aus einem Lithium-Ionen-Akku, mit hoher Energiedichte und kurzzeitig hohen zur Verfügung gestellten Strömen sowie gleichzeitig oder alternativ aus einem Schaltnetzteil mit hoher Stromstärke, hoher Spannungsstabilität und einem großem Spannungsbereich der Eingangsspannung bereit. Die Schaltungsanordnung mit den beiden genannten Spannungsquellen, nämlich dem Schaltnetzteil und dem wiederaufladbaren Batteriespeicher kann mit einfachen Bauteilen und gegebenenfalls mit vorzugsweise kompakten Standardbauteilen insbesondere auch für die beiden Spannungsquellen Schaltnetzteil und wiederaufladbarer Batteriespeicher realisiert werden. Hierdurch lassen sich auch vorteilhafte Eigenschaften hinsichtlich der durch die Schaltungsanordnung zur Verfügung gestellten Leistung für die einer elektrochemische Reinigungseinrichtung, hinsichtlich des Gewichts der Schaltungsanordnung und hinsichtlich der Kosten der Schaltungsanordnung erzielen.

Zur bedarfsweisen Bereitstellung der adäquaten Spannungsversorgung für die elektrochemische Reinigungseinrichtung weist die Schaltungsanordnung eine zwischen dem an eine externe Spannungsquelle angeschlossenen Schaltnetzteil und dem wiederaufladbaren Batteriespeicher angeordnete Spannungsverteileinheit auf. Diese Spannungsverteileinheit steuert die beiden Spannungsquellen Schaltnetzteil und wiederaufladbarer Batteriespeicher derart an, dass die beim Aufsetzen der Elektrode bzw. des Pinsels und zu Prozessbeginn auftretenden hohen Stromspitzen durch die Spannungsversorgung der elektrochemischen Reinigungseinrichtung sowohl aus dem Schaltnetzteil als auch aus dem wiederaufladbaren Batteriespeicher bereitgestellt wird und im auf den Einschaltbetrieb zeitlich folgenden Normalbetrieb der elektrochemischen Reinigungseinrichtung die Spannungsversorgung derselben größtenteils aus dem Schaltnetzteil bereitgestellt wird. Gleichzeitig wird im Normalbetrieb der elektrochemischen Reinigungseinrichtung vom Schaltnetzteil eine Ladespannung für den wiederaufladbaren Batteriespeicher vom Schaltnetzteil bereitgestellt und dieser somit aufgeladen.

Mit anderen Worten wird die Schaltungsanordnung zur Spannungsversorgung der elektrochemischen Reinigungseinrichtung in unterschiedlichen Betriebsarten derselben auf unterschiedliche Weise betrieben: Im Einschaltbetrieb bzw. Anlaufbetrieb der elektrochemischen Reinigungseinrichtung besteht oftmals kurzzeitig ein hoher Strombedarf, so dass für die elektrochemische Reinigungseinrichtung zusätzlich zur Leistung aus dem kompakten Schaltnetzteil auch Leistung aus dem wiederaufladbaren Batteriespeicher bereitgestellt wird. Unter Höchstbelastung werden beide Energiequellen, d.h. das kompakte Schaltnetzteil und der wiederaufladbare Batteriespeicher, vollständig parallelgeschaltet und liefern damit die maximal mögliche Leistung für den Betrieb der elektrochemischen Reinigungseinrichtung. Im Normalbetrieb der elektrochemischen Reinigungseinrichtung ohne hohen Strom- bzw. Leistungsbedarf derselben wird die Leistung für dieselbe zum überwiegenden Teil oder vorzugsweise vollständig aus dem kompakten Schaltnetzteil bereitgestellt. Auch können kurzzeitig auftretende Stromimpulse in der Regel alleine mit der Leistung des Schaltnetzteils abgefangen werden, gegebenenfalls kann aber hierzu auch der wiederaufladbare Batteriespeicher hinzugeschaltet werden. Die hohen Stromspitzen würden ansonsten ein zu klein dimensioniertes Schaltnetzteil zerstören oder zum Selbstschutz in die Leistungsreduzierung bzw. Abschaltung zwingen, der elektrochemische Prozess würde stoppen. Das Schaltnetzteil so groß zu dimensionieren, dass keine Leistungsabschaltung oder Reduzierung erfolgte, würde die Spannungsversorgungseinrichtung zu groß, zu teuer und störanfällig machen. Die nicht zu der Erfindung gehörende Schaltungsanordnung sorgt nicht nur dafür, dass über die Akkumulatoren genügend Strom bzw. Leistungsreserven kurzfristig abgerufen werden können und dem elektrochemischen Prozess unmittelbar zur Verfügung stehen, sondern verhindert auch eine Überforderung des Schaltnetzteils mit einhergehender Abschaltung, Leistungsreduzierung oder Zerstörung. Dadurch kann das Schaltnetzteil wesentlich kleiner, leichter und günstiger bemessen werden. Ein zuverlässigerer Betrieb ist so gewährleistet.

Falls die elektrochemische Reinigungseinrichtung nur einen geringen Leistungsbedarf aufweist oder bei einer entsprechenden Dimensionierung des Schaltnetzteils wird überschüssige Energie aus dem Schaltnetzteil zum Aufladen des wiederaufladbaren Batteriespeichers herangezogen, so dass dieser in der Regel immer vollständig aufgeladen ist, insbesondere bei einem an die Netzspannung angeschlossenen und damit eingeschalteten Schaltnetzteil. Die nicht zu der Erfindung gehörende Schaltung sorgt auch für eine selbstständige intelligente Regelung der Leistungsverteilung des Schaltnetzteils, so dass der Akkumulator im Regelbetrieb immer über 50% geladen ist und so jederzeit eventuell auftretende prozessbedingte Stromspitzen abfedern kann.

Falls kein Netzbetrieb zur Spannungsversorgung der elektrochemischen Reinigungseinrichtung möglich ist, beispielsweise bei einem Stromausfall oder wenn eine Steckdose zu weit entfernt ist oder gar nicht erreichbar ist, kann die elektrochemische Reinigungseinrichtung auch während einer bestimmten Zeitspanne, beispielsweise während einiger Minuten, autark nur von dem wiederaufladbaren Batteriespeicher mit Spannung versorgt werden. Hierbei ist es vorteilhaft, dass der wiederaufladbare Batteriespeicher wie beschrieben zu Beginn des Akkubetriebs eigentlich immer voll aufgeladen ist und der Bediener der elektrochemischen Reinigungseinrichtung dieselbe damit auch während der maximal möglichen Zeit alleine mit dem wiederaufladbaren Batteriespeicher betreiben kann.

Es kann vorgesehen sein, dass die Spannungsverteileinheit das Schaltnetzteil und den wiederaufladbaren Batteriespeicher derart ansteuert, dass das Schaltnetzteil vor einer Überlast geschützt ist. Zu diesem Zweck kann in für das Schaltnetzteil kritischen Betriebszuständen der elektrochemischen Reinigungseinrichtung rechtzeitig der wiederaufladbare Batteriespeicher zur Spannungsversorgung der elektrochemischen Reinigungseinrichtung hinzugeschaltet und damit das Schaltnetzteil entlastet und somit geschützt werden. Dadurch wird die Netzschutzfunktion für das Schaltnetzteil von der Spannungsverteileinheit übernommen.

In der Schaltungsanordnung kann ein DC/AC-Wandler mit einer Spannungsregelung und Stromregelung zwischen der Spannungsverteileinheit und der elektrochemischen Reinigungseinrichtung angeordnet sein. Durch den DC/AC-Wandler wird als Konverter die Gleichspannungsenergie (DC) der beiden Gleichspannungs-Energiequellen bzw. DC-Energiequellen Schaltnetzteil und wiederaufladbarer Batteriespeicher, in Wechselspannung (AC) umgewandelt, die für viele Anwendungszwecke der elektrochemischen Reinigungseinrichtung benötigt wird, insbesondere zum Reinigen und Polieren der Oberflächen von Werkstücken.

Der DC/AC-Wandler kann integrierte Induktivitäten und Kapazitäten zur Energiespeicherung aufweisen. Ein solcher der Spannungsverteileinheit nachgeschalteter DC/AC-Wandler mit integrierten Induktivitäten und Kapazitäten speichert zudem Energie und dämpft so die beim Betrieb der elektrochemischen Reinigungseinrichtung auftretenden hohen Spitzenströme zusätzlich.

Es kann ein Batteriemanagementsystem zwischen der Spannungsverteileinheit und dem wiederaufladbaren Batteriespeicher angeordnet sein, das den Ladezustand des wiederaufladbaren Batteriespeichers überwacht. Dieses Batteriemanagementsystem steuert und überwacht den Ladezustand des wiederaufladbaren Batteriespeichers, insbesondere werden die einzelnen Zellen des beispielsweise als Lithium-Akku ausgebildeten wiederaufladbaren Batteriespeichers untereinander abgeglichen. Hierdurch kann durch das Batteriemanagementsystem eine Schutzfunktion hinsichtlich des Entladestroms, hinsichtlich des Kurzschlussfalls, hinsichtlich der Unterladungsspannung und der Überladungsspannung realisiert werden.

Es kann ein Hallsensor zwischen der Spannungsverteileinheit und dem wiederaufladbaren Batteriespeicher angeordnet sein, der den Energiefluss in den wiederaufladbaren Batteriespeicher hinein und aus dem wiederaufladbaren Batteriespeicher heraus überwacht. Hierzu wird der in den wiederaufladbaren Batteriespeicher hineinfließende Strom und der aus dem wiederaufladbaren Batteriespeicher herausfließende Strom permanent summiert, d.h. zum Stromwert im wiederaufladbaren Batteriespeicher aufaddiert oder vom Stromwert im wiederaufladbaren Batteriespeicher subtrahiert. Demzufolge ist auch der aktuelle Ladezustand des wiederaufladbaren Batteriespeichers jederzeit bekannt und kann entsprechend ausgewertet, verarbeitet und angezeigt werden.

Es kann eine Kontrolleinheit zur Überwachung der Schaltungskomponenten der Schaltungsanordnung und zur Ablaufsteuerung der Schaltungsanordnung vorgesehen sein. Diese Kontrolleinheit ist beispielsweise als Mikrocontroller oder Mikroprozessor (µP) ausgebildet und insbesondere mit den zu steuernden und/oder zu überwachenden Schaltungskomponenten der Schaltungsanordnung direkt oder indirekt beispielsweise über Steuerleitungen verbunden.

Es kann in der Schaltungsanordnung mindestens ein Temperatursensor zur Überwachung von des Temperaturverhaltens der Schaltungsanordnung vorgesehen sein.

Insbesondere ist ein Temperatursensor an das Schaltnetzteil und ein Temperatursensor an den wiederaufladbaren Batteriespeicher gekoppelt, so dass insbesondere das Temperaturverhaltens des Schaltnetzteils und des wiederaufladbaren Batteriespeichers überwacht wird.

Bei der nicht zu der Erfindung gehörenden Schaltungsanordnung wird mit einfachen Standardkomponenten und folglich auch auf einfache Weise und mit geringen Kosten eine effiziente Bereitstellung der zum Betrieb der elektrochemischen Reinigungseinrichtung benötigten Spannungsversorgung realisiert. Diese Spannungsversorgung der elektrochemischen Reinigungseinrichtung kann insbesondere auch in unterschiedlichen Betriebszuständen der elektrochemischen Reinigungseinrichtung und somit umfassend auch bei problematischen Verhältnissen im Betrieb derselben bereitgestellt werden.

Nachfolgend ist ein Ausführungsbeispiel der Erfindung anhand der Zeichnung prinzipmäßig dargestellt.

Es zeigt:

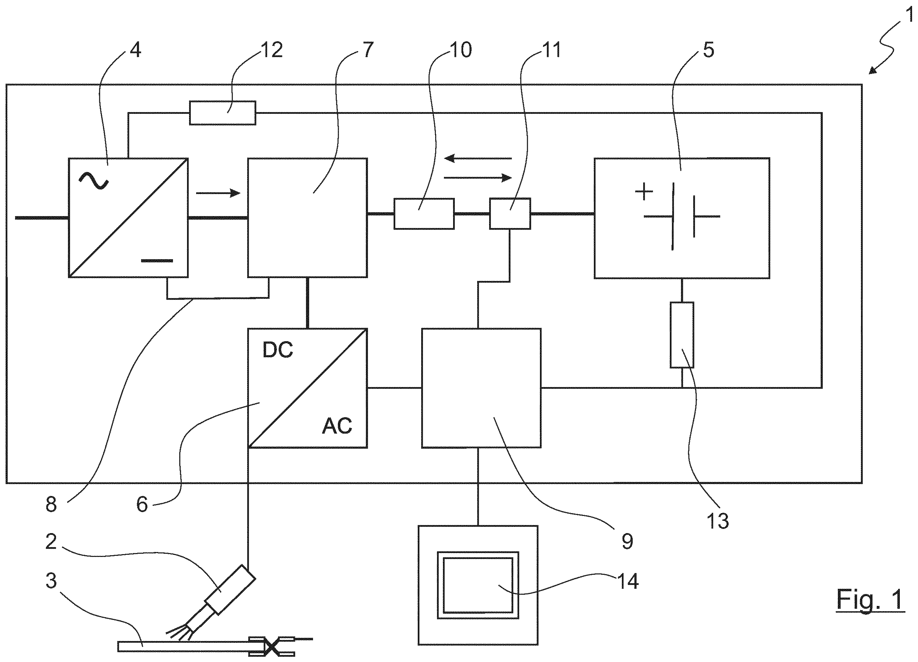

- Fig. 1: ein Blockschaltbild mit einer schematischen Darstellung der nicht zu der Erfindung gehörenden Schaltungsanordnung.

Fig. 1 zeigt eine Schaltungsanordnung 1 zur Spannungsversorgung einer elektrochemischen Reinigungseinrichtung 2 zum elektrochemischen Reinigen der Oberfläche eines Werkstücks 3. Hierzu weist die elektrochemische Reinigungseinrichtung 2 vorzugsweise eine Elektrode oder ein Kohlefaserpinsel auf.

Beim Aufsetzen der Elektrode oder des Kohlefaserpinsels der elektrochemischen Reinigungseinrichtung 2 auf das Werkstück 3 wird im Einschaltbetrieb der elektrochemischen Reinigungseinrichtung 2 quasi ein Beinahe-Kurzschluss erzeugt, wodurch in Abhängigkeit der hierbei beteiligten Widerstände sehr hohe Ströme fließen können, beispielsweise Ströme bis zu über 500 A. Während dieses Zeitraums im Einschaltbetrieb der elektrochemischen Reinigungseinrichtung 2, typischerweise in einem Zeitraum weniger Millisekunden, muss demzufolge für die elektrochemische Reinigungseinrichtung 2 eine sehr hohe Energie bereitgestellt werden.

In dem sich an den Einschaltbetrieb der elektrochemischen Reinigungseinrichtung 2 zeitlich anschließenden Normalbetrieb derselben und insbesondere ohne Auftreten von Stromspitzen, wird dagegen für die elektrochemische Reinigungseinrichtung 2 nur eine deutlich geringere Energie von durchschnittlich 50 A benötigt.

Die zur Spannungsversorgung der elektrochemischen Reinigungseinrichtung 2 vorgesehene Schaltungsanordnung 1 kann, wie nachfolgend beschrieben, für alle Lastzustände der elektrochemischen Reinigungseinrichtung 2 die jeweils benötigte adäquate Energiemenge bereitstellen.

Hierzu weist die Schaltungsanordnung 1 als erste Energiequelle ein leichtes, spannungsstabiles, sehr gut und schnell regelbares Schaltnetzteil 4 auf, das in einem weiten Bereich einer Eingangsspannung UE betrieben werden kann, beispielsweise in einem Bereich der Eingangsspannung UE zwischen 90 V und 250 V, und das daher auch als Weitbereichsschaltnetzteil bezeichnet werden kann.

Weiterhin weist die Schaltungsanordnung 1 als zweite Energiequelle einen beispielsweise als Lithium-Ionen-Akku ausgebildeten wiederaufladbaren Batteriespeicher 5 auf, der beispielsweise eine Leistung von 50 - 100 Wh bzw. 100 - 150A Impulsstrom bis maximal 10 Sekunden bereitstellen kann. Im voll aufgeladenen Zustand des wiederaufladbaren Batteriespeichers 5 kann von dem wiederaufladbaren Batteriespeicher 5 beispielsweise eine Spannung von 18 V über einen Zeitraum von bis zu 10 Minuten bereitgestellt werden.

Die von den beiden Energiequellen, nämlich dem Schaltnetzteil 4 und dem wiederaufladbaren Batteriespeicher 5, als Gleichspannung (DC) gelieferte Ausgangsspannung wird von einem DC/AC-Wandler 6 als Konverter in eine Wechselspannung (AC) umgewandelt. Mit dieser Wechselspannung wird dann die elektrochemische Reinigungseinrichtung 2 zum Reinigen oder mit Gleichspannung zum Polieren betrieben.

Damit für alle Lastzustände der elektrochemischen Reinigungseinrichtung 2, d.h. insbesondere für den Einschaltbetrieb und für den Normalbetrieb derselben 2, die jeweils benötigte adäquate Energiemenge bereitgestellt wird, ist eine Spannungsverteileinheit 7 vorgesehen, die sowohl mit dem Schaltnetzteil 4 als auch mit dem wiederaufladbaren Batteriespeicher 5 direkt oder indirekt verbunden ist.

Entsprechend der Vorgabe durch die Spannungsverteileinheit 7 wird die elektrochemische Reinigungseinrichtung 2 entweder von dem Schaltnetzteil 4 alleine mit Spannung versorgt, insbesondere im Normalbetrieb der elektrochemischen Reinigungseinrichtung 2 ohne Auftreten von übermäßigen Stromspitzen, oder aber er wird von dem Schaltnetzteil 4 und von dem wiederaufladbaren Batteriespeicher 5 gemeinsam mit Spannung versorgt, insbesondere beim Auftreten von sehr hohen Stromspitzen im Anlaufbetrieb der elektrochemischen Reinigungseinrichtung 2 und gegebenenfalls auch im Normalbetrieb der elektrochemischen Reinigungseinrichtung 2, oder er wird von dem wiederaufladbaren Batteriespeicher 5 alleine mit Spannung versorgt, insbesondere bei einem Primärspannungsausfall oder Spannungseinbrüchen beim Schaltnetzteil 4 oder beim Auftreten von Störungen oder sonstigen Problemen beim Schaltnetzteil 4.

Insbesondere wird durch die Spannungsverteileinheit 7 auch sichergestellt, dass für den wiederaufladbaren Batteriespeicher 5 im Normalbetrieb auch ein bestimmter (geringer) Ladestrom durch das Schaltnetzteil 4 bereitgestellt wird, so dass der wiederaufladbare Batteriespeicher 5 bei eingeschaltetem Schaltnetzteil 4 immer vollständig aufgeladen ist. Das Schaltnetzteil 4 ist also so ausgelegt, dass es nicht nur den Grundstrom für die elektrochemische Reinigungseinrichtung 2 liefert, sondern auch genügend Reserve hat, um den Batteriespeicher 5 aufzuladen.

Zur Überwachung und Ansteuerung des Schaltnetzteils 4 ist zwischen der Spannungsverteileinheit 7 und dem Schaltnetzteil 4 eine Steuerleitung 8 vorgesehen. Hierdurch wird insbesondere auch sichergestellt, dass für das Schaltnetzteil 4 keine kritischen Zustände auftreten können, in denen das Schaltnetzteil 4 beispielsweise geschädigt werden könnte.

Eine Steuereinheit 9 überwacht als Kontrolleinheit den gesamten Reinigungsprozess des Werkstücks 3 durch die elektrochemische Reinigungseinrichtung 2. Hierzu sind in der Steuereinheit 9 beispielsweise unterschiedliche Reinigungsprogramme, Programmabläufe und Betriebsmodi sowie verschiedenen Sonderfunktionen gespeichert. Insbesondere sind in der Steuereinheit 9 auch diverse Parameter, Kennwerte, Kennlinien und Pulsfunktionen gespeichert, die zur Auslegung und zur Durchführung des Reinigungsprozesses benötigt werden.

Ein Batteriemanagementsystem 10 dient zur Überwachung, Regelung und zum Schutz der Batteriezellen des wiederaufladbaren Batteriespeichers 5 und damit des wiederaufladbaren Batteriespeichers 5 selbst und steuert den Ladevorgang des wiederaufladbaren Batteriespeichers 5.

Mittels eines in Reihe zu dem Batteriemanagementsystem 10 geschalteten und beispielsweise in dem Batteriemanagementsystem 10 integrierten Hallsensors 11 wird der Stromfluss in den wiederaufladbaren Batteriespeicher 5 hinein und der Stromfluss aus dem wiederaufladbaren Batteriespeicher 5 heraus permanent erfasst und hierdurch der jeweils aktuelle Ladezustand des wiederaufladbaren Batteriespeichers 5 bestimmt.

Über einen mit dem Schaltnetzteil 4 verbundenen Temperatursensor 12 und einen mit dem wiederaufladbaren Batteriespeicher 5 verbundenen Temperatursensor 13 wird das Temperaturverhalten der beiden Spannungsquellen Schaltnetzteil 4 und wiederaufladbarer Batteriespeicher 5 überwacht und hierdurch ein aktives Temperaturmanagement für die Schaltungsanordnung 1 realisiert. Auf diese Weise können die beiden Spannungsquellen Schaltnetzteil 4 und wiederaufladbarer Batteriespeicher 5 auch in ihrem jeweiligen Grenzbereich betrieben werden, wobei aber beim Überschreiten bestimmter Grenzwerte oder Schwellwerte eine automatische Leistungsreduzierung eingeleitet werden kann um einen stabilen Temperaturzustand wieder herstellen zu können. Gegebenenfalls kann auch die gesamte Schaltungsanordnung 1 deaktiviert bzw. abgeschaltet werden.

Des Weiteren ist ein Monitor bzw. Display 14 vorgesehen, das zur Darstellung und zur Anzeige von bestimmten aktuellen Systemeigenschaften der Schaltungsanordnung 1 und auch zur Anzeige der aktuellen Werte von bestimmten Schaltungskomponenten der Schaltungsanordnung 1 sowie zur Menüführung beim Betrieb der elektrochemischen Reinigungseinrichtung 2 bzw. der Schaltungsanordnung 1 dient. Weiterhin kann durch entsprechende Darstellungen auf dem Display 14 auch eine Kontrolle bzw. Überwachung des Ablaufs des Reinigungsprozesses des Werkstücks 3 durch einen Bediener erfolgen.

## Patentansprüche

1. Verfahren zur Spannungsversorgung einer elektrochemischen Reinigungseinrichtung (2), mit einem an eine externe Spannungsquelle mit einer Eingangsspannung (UE) angeschlossenen Schaltnetzteil (4) und mit einem wiederaufladbaren Batteriespeicher (5), wobei eine zwischen dem Schaltnetzteil (4) und dem wiederaufladbaren Batteriespeicher (5) angeordnete Spannungsverteileinheit (7) das Schaltnetzteil (4) und den wiederaufladbaren Batteriespeicher (5) derart ansteuert, dass zumindest im Einschaltbetrieb der elektrochemischen Reinigungseinrichtung (2) die Spannungsversorgung der elektrochemischen Reinigungseinrichtung (2) aus dem Schaltnetzteil (4) und dem wiederaufladbaren Batteriespeicher (5) bereitgestellt wird, und dass im Normalbetrieb der elektrochemischen Reinigungseinrichtung (2) die Spannungsversorgung der elektrochemischen Reinigungseinrichtung (2) aus dem Schaltnetzteil (4) und eine Ladespannung für den wiederaufladbaren Batteriespeicher (5) von dem Schaltnetzteil (4) bereitgestellt wird.

## Claims

1. Method for supplying power to an electrochemical cleaning device (2), comprising a switching power supply (4) connected to an external power source with an input voltage (UE) and a rechargeable battery storage unit (5), wherein a voltage distribution unit (7) arranged between the switching power supply (4) and the rechargeable battery storage unit (5) controls the switching power supply (4) and the rechargeable battery storage unit (5) such that, at least during the start-up operation of the electrochemical cleaning device (2), the power supply to the electrochemical cleaning device (2) is provided by the switching power supply (4) and the rechargeable battery storage unit (5), and that during normal operation of the electrochemical cleaning device (2), the power supply to the electrochemical cleaning device (2) is provided by the switching power supply (4) and a charging voltage for the rechargeable battery storage unit (5) is provided by the switching power supply (4).

## Revendications

1. Procédé pour l'alimentation en tension d'un dispositif de nettoyage électrochimique (2), avec un bloc d'alimentation à découpage (4) connecté à une source de tension externe avec une tension d'entrée (UE) et avec un accumulateur rechargeable (5), dans lequel une unité de distribution de tension (7) disposée entre le bloc d'alimentation à découpage (4) et l'accumulateur rechargeable (5) commande le bloc d'alimentation à découpage (4) et l'accumulateur rechargeable (5) de telle sorte qu'au moins en mode de mise en marche du dispositif de nettoyage électrochimique (2), l'alimentation en tension du dispositif de nettoyage électrochimique (2) est fournie par le bloc d'alimentation à découpage (4) et l'accumulateur rechargeable (5), et qu'en mode de fonctionnement normal du dispositif de nettoyage électrochimique (2), l'alimentation en tension du dispositif de nettoyage électrochimique (2) est fournie par le bloc d'alimentation à découpage (4) et une tension de charge pour l'accumulateur rechargeable (5) est fournie par le bloc d'alimentation à découpage (4).
